# EUROPÄISCHE PATENTSCHRIFT

(11) **EP 1 382 961 B1**
(45) Veröffentlichungstag und Bekanntmachung des Hinweises auf die Patenterteilung: **22.12.2004**
(21) Anmeldenummer: 03023096.5
(22) Anmeldetag: 30.10.1997
(51) Int. Cl.: G01N 21/90

(54) **Inspektionsvorrichtung für Flaschen oder dgl.**
Device for inspecting bottles and the like
Dispositif d'inspection de bouteilles et d'autres articles similaires

(30) Priorität: 30.10.1996 DE 29618394 U; 19.09.1997 DE 29716878 U
(43) Veröffentlichungstag der Anmeldung: 21.01.2004
(62) Teilanmeldung aus: 97947035.8
(73) Patentinhaber: KRONES AG, 93068 Neutraubling (DE)
(72) Erfinder: Löll, Josef, 93055 Regensburg (DE)

(56) Entgegenhaltungen:
- WO-A-91/08468
- DE-U- 9 313 115
- DE-U- 29 502 708
- GB-A- 2 288 016
- US-A- 4 025 201
- US-A- 4 750 035
- PATENT ABSTRACTS OF JAPAN vol. 17, no. 109 (P-1497), 5. März 1993 (1993-03-05) & JP 04 297810 A (MITSUBISHI MATERIALS CORP), 21. Oktober 1992 (1992-10-21)

## Beschreibung

Die Neuerung betrifft eine Inspektionsvorrichtung für Flaschen oder dgl. mit einer Lichtquelle, einem Bildaufnahmeelement mit zugeordneter Bildauswerteinrichtung und einem einstückigen, optischen Körper, der aus einem lichtdurchlässigen Material besteht. Eine derartige Vorrichtung ist aus der europäischen Offenlegungsschrift 0 657 732 bekannt. Die in den Fig. 11 bis 14 dieses Dokuments in verschiedenen Abwändlungen gezeigte vorrichtung besitzt einen ringförmigen optischen Körper mit einer Ein- und Austrittsfläche für die Strahlengänge. Die innere und äußere Ringfläche des Körpers ist verspiegelt, so daß ein von der Flasche kommender Strahlengang nach dem Eintritt in den optischen Körper durch Spiegelung in Richtung zu dem Bildaufnahmeelement umgelenkt wird. Die notwendige Beschichtung des Körpers an den zur Spiegelung vorgesehenen Flächen verursacht nicht unerhebliche Kosten. Wird die Beschichtung bei der Montage oder im Betrieb verkratzt, ist der optische Körper unbrauchbar und muß ersetzt werden. Ein weiterer Nachteil dieser Inspektionsvorrichtung ergibt sich aus der höhengleichen Anordnung der einander gegenüberliegenden Spiegelflächen, wodurch ein relativ großer Abstand zwischen der abzubildenden Flaschenmündungsseitenwand und dem Abbildungskörper notwendig ist. Außerdem kann der zu inspizierende Mündungsseitenwandbereich nur aus einem ungünstigen Winkel erfaßt werden, wodurch die Abbildungsqualität beschränkt ist. Ferner wird das gesamte in den optischen Abbildungskörper gelangende Licht -auch vagabundierendes Licht- gespiegelt. Diese Vorrichtung ist auch nicht in der Lage, eine Etikettenkontrolle oder dgl. auszuführen, um am Flaschenrumpf haftende Etiketten u.ä. zu überprüfen.

Aus DE 295 02 708 U1 ist eine Inspektionsvorrichtung zur Kontrolle des Kopfbereiches von durchleuchtbaren Flaschen oder dgl. bekannt. In diesem Dokument wird die Möglichkeit offenbart, den Kopfbereich einer Flasche anstelle von stationären Spiegeln durch um den Umfang des Kopfbereiches einer Flasche versetzt oberhalb der Mündung angeordnete Glasfasern auf eine Kamera abzubilden. Nachteilig daran ist der Umstand, dass jede der dafür notwendigen zahlreichen Glasfasern nur einen sehr kleinen Teilbereich der Umfangsfläche einer Flasche abbildet, so dass eine vollumfängliche Abbildung nur durch eine alle aus den einzelnen Glasfasern austretenden Lichtstrahlen zu einem gemeinsamen Bild bündelnde Linsenoptik erreicht werden kann. Eine derartige Linsenoptik verursacht zusätzlichen Aufwand. Ein weiterer Nachteil ist darin zu sehen, dass die Vielzahl der Glasfasern einen erheblichen Montageaufwand zur exakten Einjustierung der einzelnen Glasfasern erfordert.

Demzufolge liegt der Neuerung die Aufgabe zugrunde, eine Inspektionsvorrichtung diesbezüglich zu verbessern.

Diese Aufgabe wird dadurch gelöst, daß der einstückige, aus lichtdurchlässigem Material bestehende optische Körper eine derart gestaltete Kontur aufweist, daß ein von der beleuchteten, abzubildenden Flasche kommender, vollumfänglicher Strahlengang auf dem Weg zum Bildaufnahmeelement beim Durchtritt durch den optischen Körper mehrfach mittels Totalreflexion innerhalb des optischen Körpers umgelenkt wird. Wegen der eine mehrfache Totalreflexion des Strahlengangs verursachenden Gestaltung der Körperkontur sind keine lichtundurchlässigen Spiegelflächen notwendig, so daß der Herstellungsaufwand reduziert wird. Gemäß einer Weiterbildung der Neuerung können die die Totalreflexion bewirkenden Flächen des optischen Körpers bei einer wenigstens dreifachen Totalreflexion günstigerweise derart höhenversetzt zueinander angeordnet werden, daß die vollumfänglich zu prüfenden Abschnitte einer Flasche aus einem günstigeren Winkel erfaßbar sind. Diese Lösung ist speziell bei einer Gewindeinspektion von Vorteil.

Weil im Gegensatz zum bekannten Stand der Technik auf verspiegelte Flächen verzichtet werden kann, können zum einen die zu prüfenden Flaschenumfangsbereiche von oben durch den optischen Körper hindurch beleuchtet werden, mit dem Vorzug, daß eine problemlose Ringbeleuchtung realisierbar ist, und zum anderen werden undefinierte, für die Inspektion unerwünschte Lichtstrahlen bei Überschreitung des für die Totalreflexion maßgebenden Grenzwinkels nicht in Richtung zum Bildaufnahmeelement reflektiert, sondern können aus dem optischen Körper ins Freie austreten.
Weitere vorteilhafte Ausgestaltungen der Neuerung sind Gegenstand der Unteransprüche.

Nachfolgend werden bevorzugte Ausführungsbeispiele anhand der Figuren erläutert. Es zeigt:
- Fig . 1a: einen vertikalen Schnitt durch einen optischen Körper, für die Mündungsseitenwandinspektion von Flaschen, insbesondere mit einem Schraubgewinde,
- Fig. 1b: eine zweite Ausführung eines optischen Körpers mit dem zusätzlich auch eine Innenseitenwand-, Boden- und Mündungsdichtflächeninspektion bei transparenten Flaschen möglich ist,
- Fig, 1c: einen optischen Körper entsprechend der Fig.
- bis 1e: 1a mit einem zweiten, konzentrischen optischen Körper in drei verschiedenen Ausführungen und
- Fig. 2a bis 2d: einen vertikalen Schnitt durch einen optischen Körper zur Flaschenseitenwandabbildung.

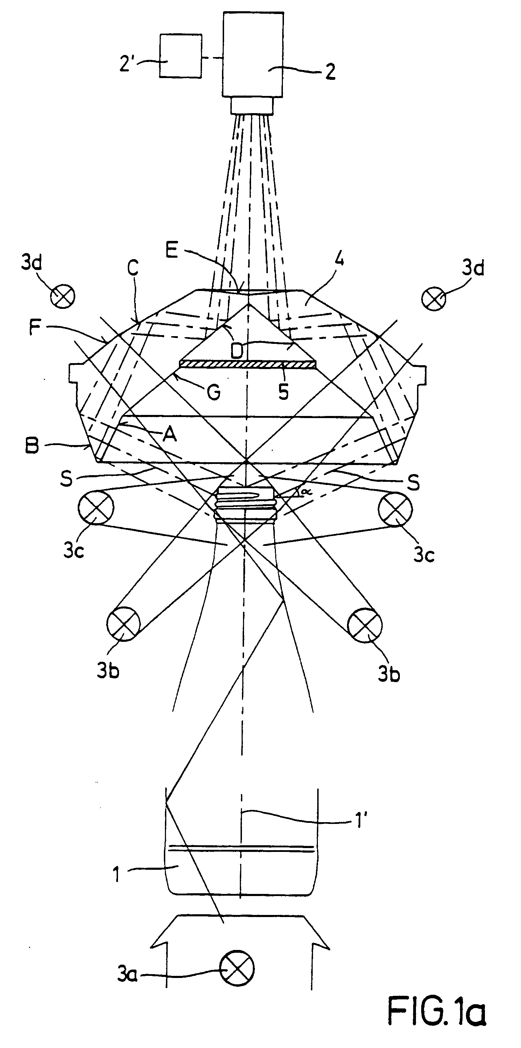

Der in Fig. 1a erkennbare rotationssymmetrische Körper 4 ist koaxial unterhalb einer nach unten gerichteten CCD-Kamera 2 angeordnet. Die Bildaufnahme erfolgt in dem Augenblick, wenn eine zu prüfende, leere Flasche 1 mit ihrer Hochachse 1' während dem kontinuierlich erfolgenden Transport kurzzeitig im wesentlichen mit der optischen Achse der Kamera 2 und der Symmetrieachse des Körpers 4 fluchtet. Zur Bildauswertung wird eine elektronische Auswerteinrichtung 2' eingesetzt, durch die dann eine "Gut-Schlecht"-Klassifizierung der abgebildeten Flaschen erfolgt.

Die Beleuchtung einer leeren, oben offenen Flasche 1 aus transparentem Material erfolgt durch eine Lichtquelle 3a, die unter dem Flaschenboden angeordnet ist oder durch eine seitlich neben dem zu prüfenden Flaschenwandabschnitt positionierte Lichtquelle 3c. Ferner kann der entsprechende Flaschenwandabschnitt schräg von unten nach oben, oder umgekehrt, schräg von oben nach unten durch unterhalb bzw. oberhalb der Flaschenmündung plazierte Lichtquellen 3b bzw. 3d beleuchtet werden. Weil der optische Körper 4 keine verspiegelten Flächen besitzt, kann die für eine Beleuchtung von oben notwendige Lichtquelle 3d auch oberhalb des optischen Körpers angeordnet werden und, da sie sich dort außerhalb der beispielsweise geradlinigen Flaschenförderbahn befindet, idealerweise ringförmig nach Art eines Toruskörpers ausgebildet sein. Damit ist eine über den gesamten Umfang gleichmäßige Ausleuchtung, vor allem der Mündungsfläche bei einer Dichtflächeninspektion, erreichbar.

Die zuvor genannten verschiedenen Beleuchtungsvarianten können nicht nur alternativ, sondern auch in geeigneter Kombination in Abhängigkeit der Flascheneigenschaften (Kontur etc.) und der zu kontrollierenden Bereiche zum Einsatz kommen. Sind die Flaschen nicht durchleuchtbar, erfolgt die Beleuchtung im Auflichtverfahren durch die Lichtquellen 3d bis 3d, während die Bodenlichtquelle dann entfallen kann.

Der in Fig. 1a erkennbare Strahlengangverlauf S wird durch die gewählte Kontur des optischen Körpers 4 bestimmt, der drei derart geneigte Flächenabschnitte B, C, D besitzt, daß ein von der Mündungsseitenwand der Flasche 1 kommender, von unten schräg nach oben gerichtet in den aus Glas oder Kunststoff, z.B. Acrylglas, bestehenden Körper 4 eintretender Strahlengang S durch Totalreflexion an den Flächen B, C, D insgesamt dreimal umgelenkt wird und schließlich nach oben zur Kamera 2 konvergierend aus dem Körper 4 austritt. Es versteht sich, daß die Neigung der drei genannten Flächen B, C, D in Bezug auf den einfallenden Strahlengang S so gewählt ist, daß der für die Totalreflexion maßgebende, materialabhängige Grenzwinkel nicht unterschritten wird. Besonders brauchbare Abbildungen sind erreichbar, wenn sich der Neigungswinkel der Mittelachse des auf den Mündungsbereich treffenden Strahlengangabschnitts in einem Bereich von 15 bis 30 Grad, bezogen auf die horizontale Mündungsebene, bewegt, insbesondere wenn er 27 Grad beträgt.

Dadurch, daß der erste Flächenabschnitt B tiefer angeordnet ist als der zweite, ebenfalls an der Außenfläche liegende Flächenabschnitt C, kann der untere Rand des hohlkegelstumpfförmigen, rotationssymmetrischen Scheibenkörpers 4 dicht an die Mündung der zu prüfenden Flasche 1 heranreichen, wodurch eine weitgehend seitliche Bildaufnahme der ein Schraubgewinde besitzenden Mündungsseitenwandfläche möglich ist, d.h. der vollumfänglich von der Mündung auseinanderlaufende Strahlengang S schließt mit der Horizontalen einen spitzen Winkel ein. Aufgrund der Neigung der am unteren Bereich des Körpers 4 vorhandenen Strahlengangeintrittsfläche A und des Außenflächenabschnitts B besitzt der Körper 4 im Querschnitt gesehen - einen schneidenförmigen unteren Rand.

Die mit A bezeichnete Innenfläche am unteren Rand des Körpers ist rechtwinklig zur Mittelachse des von der Flaschenmündungsseitenwand kommenden Strahlengangs S ausgerichtet, d.h. das Lot der Eintrittsfläche A fluchtet mit der Strahlengangachse. Auf diese Weise wird eine Brechung beim Übergang vom optisch dünneren in das dichtere Medium vermieden. Aus dem gleichen Grund ist die an der Oberseite des Körpers 4 vorhandene, zur Kamera 2 weisende Austrittsfläche E ebenfalls so geneigt, daß sie vom austretenden Strahlengang lotrecht nach oben in Richtung zur Kamera passiert wird.

Ferner besitzt der optische Körper 4 an seiner Außen- und Innenkontur zwei gegenüberliegende, parallel geneigte Flächenabschnitte G und F, die bezüglich der Flaschenmündung so angeordnet sind, daß im Falle einer Beleuchtung der Mündung mit einer oberhalb des Körpers 4 angeordneten Lichtquelle 3d ein Teil des abgestrahlten Lichts den Körper 4 normal zu den Flächenabschnitten G und F ausgerichtet in Richtung zur Flaschenmündung im wesentlichen ohne Brechung passieren kann.

Wenn eine Bodenlichtquelle 3a zum Einsatz kommt, aber keine Flaschenbodeninspektion erforderlich ist bzw. nicht in Verbindung mit der Mündungsseitenwandinspektion erfolgen soll, kann im Hohlraum des Körpers 4 oberhalb des Flächenabschnitts G eine lichtundurchlässige Scheibe 5 eingesetzt werden, damit das senkrecht vom Flaschenboden kommende, durch den Mündungsinnenquerschnitt nach oben austretende Licht nicht in das Kameraobjektiv gelangt.

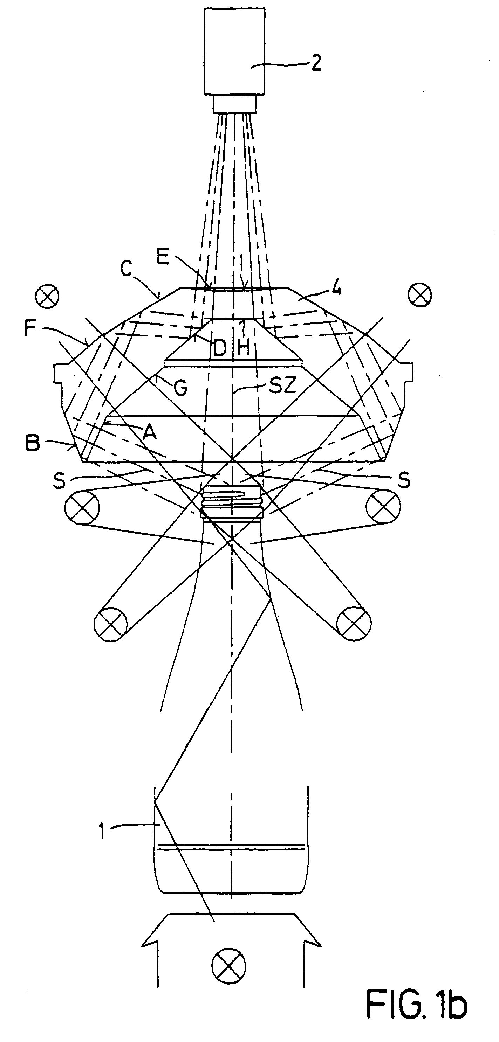

In diesem zuletzt genannten Punkt unterscheidet sich die in Fig. 1b abgebildete Variante des Körpers 4, bei der mittels einer Bodenbeleuchtung auch eine Innenseitenwand-, Boden- und Mündungsdichtflächeninspektion gleichzeitig mit der Gewindekontrolle stattfindet, wobei die vollumfängliche Bildaufnahme der Mündungsseitenwand in der gleichen Weise wie bei der in Fig. 1a gezeigten Ausführung erfolgt. Bei der Variante nach Fig. 1b befindet sich keine lichtundurchlässige Scheibe im Zentrum des Körpers, so daß das aus der Flaschenmündung und der Mündungsdichtfläche vertikal nach oben austretende Lichtbündel SZ ungehindert durch den Körper 4 hindurch zur Kamera 2 gelangt. Im Unterschied zur Ausführung in Fig. 1a besitzt der Körper 4 nach Fig. 1b an seinem oberen, zentralen Teil an der Außen- und Innenseite zwei horizontale, planparallele Flächen H und I, durch die der vertikale, die Mündung und den Flaschenboden abbildende Lichtstrahl SZ im wesentlichen brechungsfrei durchtreten kann. wie aus den Abbildungen zu erkennen ist, besitzen die kreisförmig in Umfangsrichtung gekrümmten Flächenabschnitte A, B, C, D, F und G gerade Mantellinien.

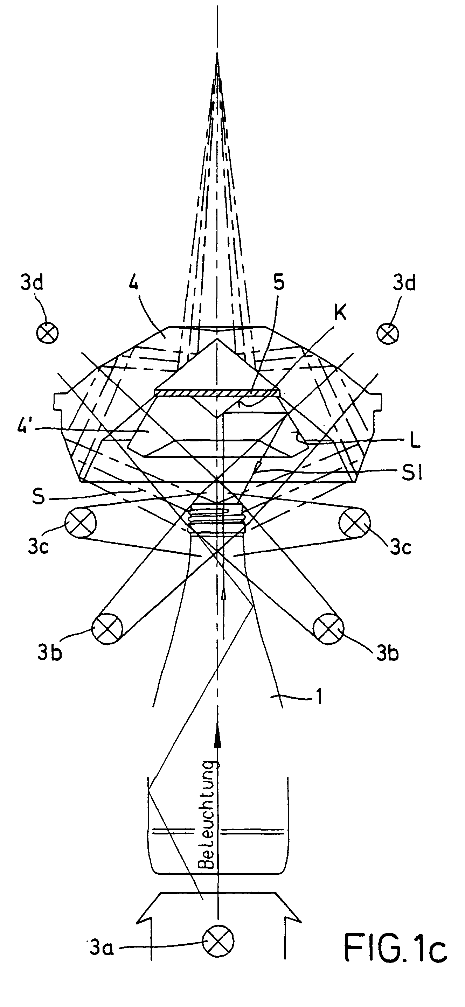

Die in den Fig. 1c bis 1d gezeigten Varianten unterscheiden sich von den Ausführungen nach den Fig. 1a und 1b durch einen zusätzlichen, im Innenraum des Körpers 4 konzentrisch befestigten, z.B. mit Klebstoff, Körper 4'. In Fig. 1c wird von der Bodenlichtquelle 3a kommendes, aus der Flaschenmündung nach oben austretendes Licht vom Körper 4', der ebenfalls aus lichtdurchlässigem Material besteht, durch zweimalige Totalreflexion an zwei kegelförmigen Körperflächen K und L so umgelenkt, dass es schräg von oben auf die Mündungsdichtfläche trifft und diese optimal ausleuchtet.

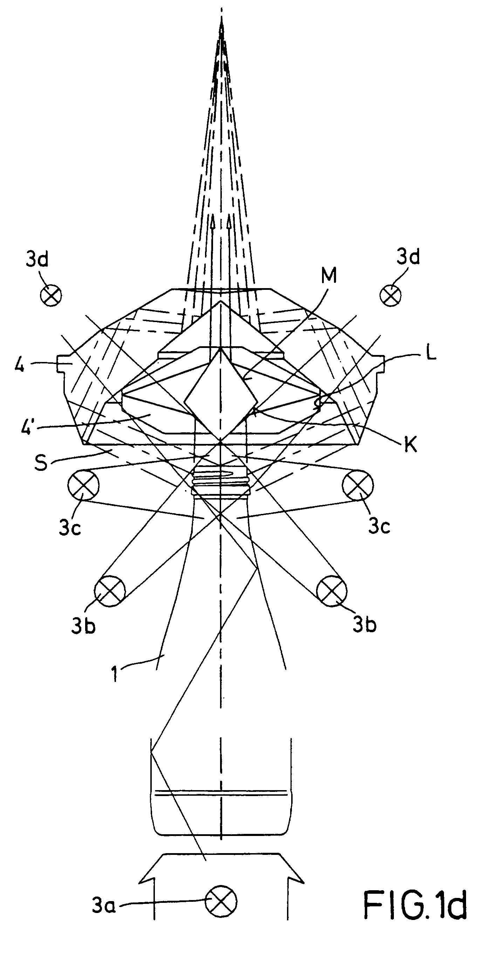

Der Körper 4' in Fig. 1d ist so geformt, dass aus der Flaschenmündung und deren Dichtfläche nach oben austretendes Licht an drei Körperflächen K, L und M jeweils durch Totalreflexion nach oben zur Kamera umgelenkt wird.

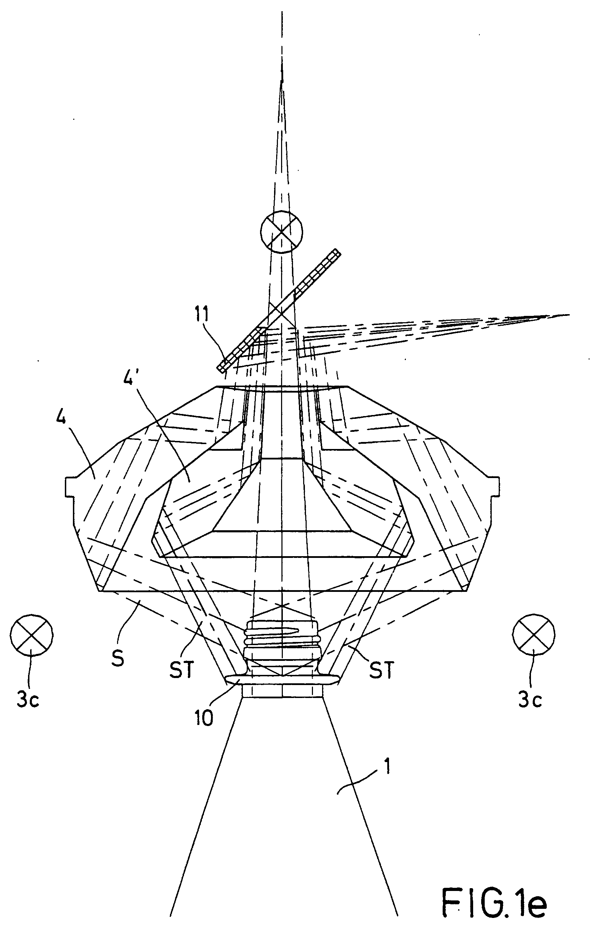

In Fig. 1e ist ein Körper 4' dargestellt, der zur Inspektion eines Tragringes 10 im Bereich unterhalb der Mündung dient. Der durch zweifache Totalreflexion gebildete vollumfängliche Strahlengang ST besitzt einen optimalen Auftreffwinkel zum Erkennen von Rissen, Ausbrüchen oder Codes am Tragring. Von einem ringscheibenförmigen Spiegel 11 können die Strahlengänge zur Seite zu einer Kamera abgelenkt werden, so dass von oben, durch das Loch im Spiegelzentrum, eine Flaschenbeleuchtung erfolgen kann.

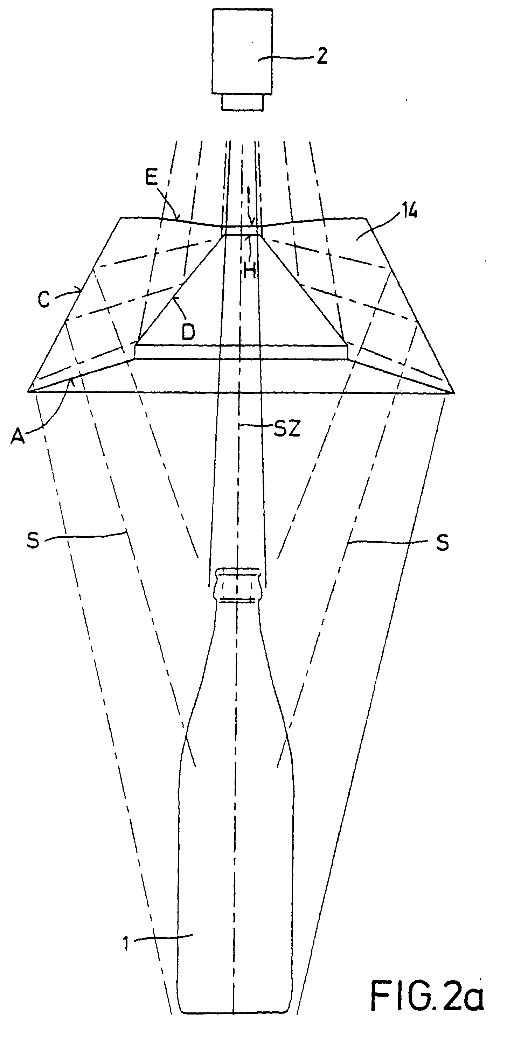

In Fig. 2a ist ein optischer Körper 14 dargestellt, dessen Geometrie bzw. Innen- und Außenkontur so gestaltet ist, daß die Flaschenseitenwand über ihre gesamte Höhe vollumfänglich abgebildet wird. Gleichzeitig können, wie bei der Ausführung nach Fig. 1b, bei entsprechender Beleuchtung auch der Flaschenboden und die Mündungsdichtfläche auf Beschädigungen oder Verschmutzungen überprüft werden. Zu diesem Zweck wird ein zentral ausgerichteter, vertikal verlaufender Strahlengang SZ zur Kamera 2 durch das Zentrum des Körpers 14 geleitet. Der optische Körper besitzt analog zur Ausführung nach Fig. 1b im Zentrum einen horizontalen Abschnitt mit planparallelen Flächen H und I für den senkrecht aus der Flaschenmündung kommenden Strahlengang SZ, der die Mündungsdichtfläche und den Flaschenboden in der Kamera 2 abbildet. Auch hier erfolgt beim Durchtritt des Strahlengangs durch die planparallelen Flächen H und I im wesentlichen keine Brechung.

Wie bei den vorhergehend beschriebenen Ausführungen sind bei dem in Fig. 2a dargestellten optischen Körper 14 die Strahlein- und -austrittsflächen A und E so angeordnet, daß ein die Flaschenseitenwand beinhaltender Strahlengang S diese Flächen normal, d.h. im wesentlichen brechungsfrei passiert. Beim Durchgang durch den optischen Körper 14 erfolgt eine zweifache Umlenkung des Strahlengangs S durch Totalreflexion an einer äußeren und einer inneren, unverspiegelten Fläche des Körpers, wobei ein von der Flaschenaußenwand schräg nach oben verlaufender Strahl S nach dem Eintritt in den optischen Körper 14 zuerst durch die äußere Fläche C radial nach innen zur zweiten, innenliegenden Fläche D und von dieser wiederum nach oben zu einer CCD-Kamera 2 reflektiert wird. Die Beleuchtung der Flasche kann vom Boden und/oder der Seite erfolgen. Die beiden Flächen C und D sind in Umfangsrichtung kreisförmig gekrümmt, besitzen jedoch gerade Mantellinien. Mit dem Körper 14 kann die gesamte Flaschenaußenwand vollumfänglich auf die Kamera 2 projiziert und dort als Kreisfläche abgebildet werden. Die Abbildung wird dann in herkömmlicher Weise zur Erkennung von Beschädigungen oder Verschmutzungen ausgewertet.

Es besteht alternativ die Möglichkeit, den optischen Körper 14 pyramidenstumpfförmig auszubilden, so daß die die Totalreflexion bewirkenden Flächen aus mehreren umfänglich versetzten ebenen Teilflächen bestehen. Mit einer derartigen Kontur bzw. Geometrie können durch verzerrungen verursachte Abbildungsfehler reduziert werden, die bei gekrümmten Flächen nicht immer ganz vermieden werden können. Diese Ausgestaltung ist auch auf die in den Fig. 1a und 1b dargestellten optischen Körper 4 übertragbar.

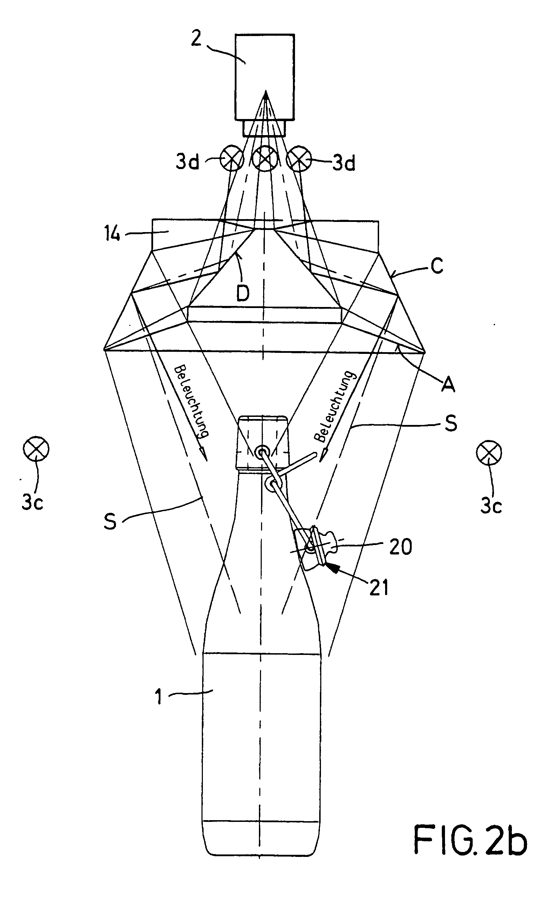

Die Fig. 2b zeigt einen besonders vorteilhaften Anwendungsfall des Körpers 14, mit dem aufgrund der vollumfänglichen Abbildung der Flaschenmantelfläche mit geringstem Aufwand gezielt das Vorhandensein bestimmter Qualitätsmerkmale am Flaschenmantel feststellbar ist, die sich an einer beliebigen Umfangsstelle befinden können, ohne vor der Bildaufnahme eine Ausrichtung der Flasche vornehmen zu müssen, wie das bisher beispielsweise zum Überprüfen des Verschlusses einer Bügelverschlussflasche der Fall war (siehe EP 0512539 B1). Der Körper 14 projiziert die gesamte Schulterfläche einer geöffneten Bügelverschlussflasche auf die Kamera 2, deren zugeordnete Bildauswerteinrichtung dann aus der kreisförmigen Abbildung zunächst die Position des Verschlusskörpers 20 ermittelt, um dann anschließend das Vorhandensein eines Verschlussdichtgummis 21 zu überprüfen. Die Beleuchtung kann, wie im Zusammenhang mit den Fig. 1a, 1b bereits erläutert wurde, durch geeignete Leuchtkörper 3c,3d von der Seite oder von oben erfolgen. Die zu überprüfenden Flaschen können in beliebiger Drehstellung einfach mittels einem Plattenförderband oder dgl. unter dem Körper 14 kontinuierlich vorbeigeführt werden.

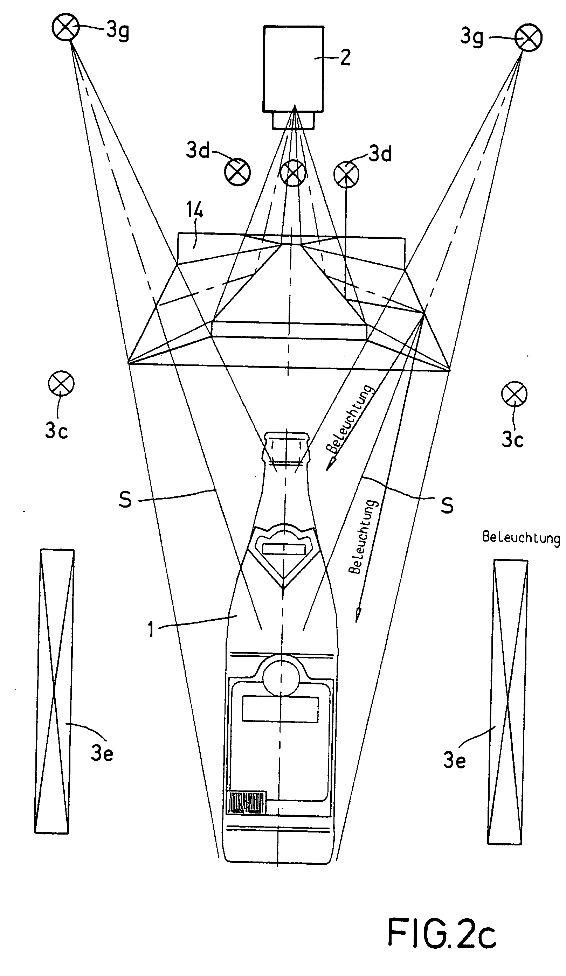

Auf gleiche Weise kann auch eine Etikettenkontrolle erfolgen, um fehlende, schrägsitzende oder falsche Etiketten, d.h. solche mit einem verkehrten Logo oder Barcode zu erkennen (Fig.2c). Auch hier wird zuerst die gesamte Mantelfläche vollumfänglich aufgenommen, um dann aus der Kreisabbildung die Lage der Etiketten zu ermitteln. Für diese Aufgabe können der Bildauswerteinrichtung die korrekte Höhenlage, Form, Ausrichtung bezüglich der Flaschenhochachse, das Logo und der Barcode der Etiketten vorgegeben werden. Die Beleuchtung kann wiederum durch Leuchtkörper 3c,3d,3e,3g von der Seite oder oben erfolgen.

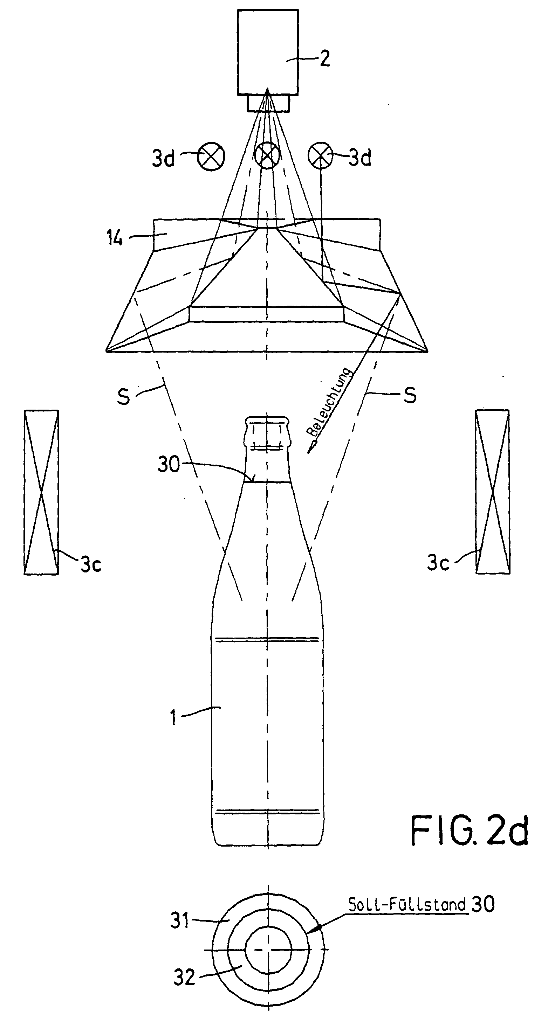

Entsprechend der Fig. 2d kann mit Hilfe des Körpers 14 bei einer gefüllten, aus transparentem Material bestehenden Flasche auch die Höhenlage des Füllspiegels 30 kontrolliert werden, der als eine Kreislinie zwischen zwei Kreisringen 31,32 mit unterschiedlicher Helligkeit in der Abbildung erscheint. Diese Füllspiegelkontrolle ist vorteilhafterweise auch dann möglich, wenn sich im Höhenbereich des Füllspiegels ein Etikett befindet, das die Flasche nur teilumfänglich bedeckt, wobei der etikettenfreie Umfangsbereich zur Bildauswertung herangezogen wird.

## Patentansprüche

1. Inspektionsvorrichtung für Flaschen mit wenigstens einer Lichtquelle (3)zum Beleuchten der Flaschen, einem Bildaufnahmeelement (2) mit einer zugeordneten Bildauswerteinrichtung und einem optischen Körper (4, 14) aus lichtdurchlässigem Material, **dadurch gekennzeichnet, daß** der optische Körper einstückig ausgebildet und dessen Kontur so gestaltet ist, daß ein eine beleuchtete Flasche (1) zumindest bereichsweise vollumfänglich abbildender Strahlengang (S) entsteht, dessen Licht beim Passieren des optischen Körpers (4, 14) mehrfach durch innere Totalreflexion umgelenkt wird.

2. Vorrichtung nach Anspruch 1, **dadurch gekennzeichnet, daß** die Eintritts- und/oder Austrittsfläche (A, E) des optischen Körpers (4, 14) rechtwinklig zu der Achse des von dem abzubildenden Flaschenbereich kommenden Abschnitts des Strahlengangs (S) bzw. des zu dem Bildaufnahmeelement (2) führenden Abschnitts des Strahlengangs (S) ausgerichtet ist.

3. Vorrichtung nach Anspruch 1 oder 2, **dadurch gekennzeichnet, daß** ein insbesondere für eine Gewindeund/oder Mündungsseitenwandinspektion verwendbarer optischer Körper (4) zwei Außenflächenabschnitte (B, C) und einen Innenflächenabschnitt (D) aufweist, die derart zueinander geneigt ausgerichtet sind, daß an diesen Abschnitten jeweils eine Totalreflexion eines Strahlengangs (S) erfolgt.

4. Vorrichtung nach Anspruch 3, **dadurch gekennzeichnet, daß** die zwei Außenflächenabschnitte (B, C) höhenmäßig übereinander versetzt, gegensinnig geneigt angeordnet sind.

5. Vorrichtung nach Anspruch 3 und 4, **dadurch gekennzeichnet, daß** ein von der beleuchteten Flasche (1) kommender Strahlengang (S) dessen Achse zur Mündungsebene bzw. Horizontalen mit einem spitzen Winkel (α) im Bereich zwischen 15 bis 30 Grad, insbesondere 27 Grad, geneigt verläuft, zuerst auf den ersten, untenliegenden Außenflächenabschnitt (B) trifft, dort zum höherliegenden zweiten Außenflächenabschnitt (C) und von diesem zum Innenflächenabschnitt (D) reflektiert wird, der wiederum eine zum Bildaufnahmeelement (2) gerichtete Totalreflexion bewirkt.

6. Vorrichtung nach Anspruch 5, **dadurch gekennzeichnet, daß** die Neigung des Innenflächenabschnitts (D) so gewählt ist, daß der die Flasche wenigstens bereichsweise vollumfänglich abbildende Strahlengang zum Bildaufnahmeelement (2) konvergiert.

7. vorrichtung nach einem der Ansprüche 1 bis 6, **dadurch gekennzeichnet, daß** der optische Körper (4, 14) eine zur Flasche (1) gerichtete Lichteintrittsfläche (A) für den von der abzubildenden Flasche kommenden Strahlengang (S) aufweist und diese mit dem ersten, die erste Totalreflexion bewirkenden Aussenflächenabschnitt (B) einen schneidenförmigen, unteren Rand am optischen Körper (4, 14) bildet.

8. vorrichtung nach einem der Ansprüche 1 bis 7, **dadurch gekennzeichnet, daß** der Körper (4, 14) einen oberhalb der Flaschenmündung angeordneten unteren Rand aufweist.

9. Vorrichtung nach einem der Ansprüche 1 bis 8, **dadurch gekennzeichnet, daß** der optische Körper (4, 14) als geschlossener, im wesentlichen scheibenartiger Körper mit einem haubenförmigen vertikalen Querschnitt ausgebildet ist.

10. Vorrichtung nach einem der vorhergehenden Ansprüche 1 bis 9, **dadurch gekennzeichnet, daß** der optische Körper (4, 14) einen von seiner Unterseite in Richtung zur Oberseite sich verjüngenden Hohlraum aufweist, dessen Zentrumsbereich eine Sperre (5) gegen axialen Lichtdurchgang von der Flaschenmündung zu dem koaxial darüber angeordneten Bildaufnahmeelement (2) aufweist, insbesondere wenn die Flasche (1) vom Flaschenboden her beleuchtet wird.

11. Vorrichtung nach einem der Ansprüche 1 bis 10, **dadurch gekennzeichnet, daß** eine Lichtquelle (3a), insbesondere Stroboskoplampe, unterhalb der Flasche (1) positioniert ist und den Flaschenboden beleuchtet.

12. Vorrichtung nach einem der Ansprüche 1 bis 10, **dadurch gekennzeichnet, daß** eine Lichtquelle (3b) seitlich unterhalb des zu prüfenden Flaschenumfangsabschnitts angeordnet ist und diesen von außen schräg nach oben in Richtung zur Flaschenmündung gerichtet beleuchtet.

13. Vorrichtung nach einem der Ansprüche 1 bis 10, **dadurch gekennzeichnet, daß** eine Lichtquelle (3c) seitlich neben dem zu prüfenden Flaschenumfangsabschnitt angeordnet ist und diesen von außen beleuchtet.

14. Vorrichtung nach einem der Ansprüche 1 bis 10, **dadurch gekennzeichnet, daß** eine Lichtquelle (3d) oberhalb der Flaschenmündung angeordnet ist und den zu prüfenden Flaschenumfangsabschnitt schräg von oben beleuchtet.

15. Vorrichtung nach Anspruch 14, **dadurch gekennzeichnet, daß** die Lichtquelle (3d) oberhalb des optischen Körpers (4) angeordnet ist und den zu prüfenden Flaschenumfangsabschnitt durch den optischen Körper (4) hindurch beleuchtet, wobei die Lichtquelle (3d) vorzugsweise ringförmig ausgebildet ist.

16. vorrichtung nach Anspruch 15, **dadurch gekennzeichnet, daß** der Eintritts-(F) und Austrittsflächenabschnitt (G) für die Lichtquelle (3d) am optischen Körper (4) so ausgebildet sind, daß die von der Lichtquelle (3d) kommenden Lichtstrahlen die Flächenabschnitte (F, G) lotrecht passieren.

17. vorrichtung nach Anspruch 10, **dadurch gekennzeichnet, daß** eine Lichtquelle im Hohlraum des optischen Körpers (4) angeordnet ist.

18. Vorrichtung nach einem der vorhergehenden Ansprüche, **dadurch gekennzeichnet, daß** der optische Körper (4, 14) koaxial zur optischen Achse des Bildaufnahmeelements (2) ausgerichtet ist und die Bildaufnahme dann erfolgt, wenn die Flaschenhochachse im wesentlichen mit der optischen Achse des Bildaufnahmeelements (2) fluchtet.

19. Vorrichtung nach einem der vorhergehenden Ansprüche, **dadurch gekennzeichnet, daß** das Bildaufnahmeelement (2) eine CCD-Kamera mit einem Objektiv ist, insbesondere einer telezentrischen Optik.

20. Vorrichtung nach einem der vorhergehenden Ansprüche, **dadurch gekennzeichnet, daß** die Kontur des optischen Körpers (4) so gestaltet ist, daß der Mündungsseitenwandbereich einer Flasche (1) vollumfänglich erfaßt wird, insbesondere auch ein in diesem Bereich vorhandenes Schraubgewinde.

21. Vorrichtung nach einem der Ansprüche 1 bis 19, **dadurch gekennzeichnet, daß** die Kontur des optischen Körpers (14) so gestaltet ist, daß die Flaschenseitenwand über ihre gesamte Höhe vollumfänglich erfaßt wird.

22. vorrichtung nach einem der vorhergehenden Ansprüche, **dadurch gekennzeichnet, daß** der optische Körper (4, 14) für eine Innenseitenwand- und/oder Boden- und/oder Mündungsdichtflächenkontrolle im Zentrum zwei planparallele Flächen (H, I) oder eine Öffnung aufweist.

23. Vorrichtung nach einem der vorhergehenden Ansprüche, **dadurch gekennzeichnet, daß** der optische Körper (4, 14) rotationssymmetrisch ausgebildet ist.

24. Vorrichtung nach einem der vorhergehenden Ansprüche 1 bis 22, **dadurch gekennzeichnet, daß** der optische Körper die Kontur eines Pyramidenstumpfs, insbesondere Hohlpyramidenstumpfs, aufweist.

25. Vorrichtung nach einem der vorhergehenden Ansprüche, **dadurch gekennzeichnet, daß** die eine Totalreflexion eines Strahlengangs (S) bewirkenden Flächenabschnitte (B, C, D) des optischen Körpers (4, 14) gerade Mantellinien aufweisen.

26. Vorrichtung nach einem der vorhergehenden Ansprüche, **dadurch gekennzeichnet, dass** ein optischer Körper so ausgebildet ist, dass wenigstens zwei, unterschiedlich zur Flaschenhochachse geneigte Strahlengänge erzeugt werden.

27. vorrichtung nach Anspruch 26, **dadurch gekennzeichnet, dass** ein erster Strahlengang zur Abbildung und ein zweiter Strahlengang zur Beleuchtung einer Flasche verwendet wird.

28. Vorrichtung nach Anspruch 27, **dadurch gekennzeichnet, dass** die Mündung einer offenen Flasche durch einen Strahlengang abgebildet wird, wobei die Flasche am Boden beleuchtet wird.

29. Vorrichtung nach Anspruch 26, **dadurch gekennzeichnet, dass** ein Strahlengang die Stirnfläche und/oder einen Halskragen einer Flasche und ein oder mehrere weitere Strahlengänge die Mantelfläche der selben Flasche vollumfänglich bereichsweise oder vollflächig abbilden, vorzugsweise den Mündungsseitenwandbereich.

30. Vorrichtung nach wenigstens einem der vorhergehenden Ansprüche 1 bis 29, **dadurch gekennzeichnet, dass** zum Überprüfen von wenigstens einem Qualitätsmerkmal im Bereich der Mantelfläche einer Flasche oder dgl. mittels einer Beleuchtung der Mantelfläche und einer Bildaufnahmeeinrichtung mit einer zugeordneten Bildauswerteinrichtung, wobei die Mantelfläche, zumindest in dem das Qualitätsmerkmal aufweisenden Höhenabschnitt, mittels wenigstens einen von der Mantelfläche kommenden Strahlengang auf die Bildaufnahmeeinrichtung projizierenden optischen Mitteln vollumfänglich erfasst, auf der Bildaufnahmeeinrichtung abgebildet und von der Bildauswerteinrichtung verarbeitet wird.

31. Vorrichtung nach Anspruch 30, **dadurch gekennzeichnet, dass** die Mantelfläche von den optischen Mitteln über ihre gesamte Höhe vollumfänglich erfaßt und abgebildet wird.

32. Vorrichtung nach Anspruch 30 oder 31, **dadurch gekennzeichnet, dass** die Bildauswerteinrichtung aus der vollumfänglichen Abbildung zunächst die Position eines sich an einer beliebigen Umfangs- oder Höhenposition der Flaschenmantelfläche befindenden Qualitätsmerkmals ermittelt und dieses mit einem vorgebbaren Sollwert oder Referenzmuster vergleicht und bei einer unzulässigen Abweichung ein Signal abgibt.

33. Vorrichtung nach einem der Ansprüche 30 bis 32, **dadurch gekennzeichnet, dass** das zu überprüfend Qualitätsmerkmal die Verschlußdichtfläche einer geöffneten Bügelverschlußflasche und/oder ein Etikett an der Mantelfläche einer Flasche oder dgl., insbesondere die Form und/oder die Lage und/oder die Farbe und/oder das Logo und/oder ein Barcode und/oder ein Aufdruck des Etiketts ist

34. Vorrichtung nach einem der Ansprüche 30 bis 33, **dadurch gekennzeichnet, dass** das zu überprüfende Qualitätsmerkmal der Füllspiegel einer aus transparentem Material bestehenden Flasche ist.

35. Vorrichtung nach einem der Ansprüche 30 bis 34, **dadurch gekennzeichnet, dass** die optischen Mittel stationär oberhalb der mittels einer Transporteinrichtung kontinuierlich vorbeiführbaren Flaschen oder dgl. angeordnet und vorzugsweise als ein aus lichtdurchlässigem Material bestehender, insbesonders nach wenigstens einem der Ansprüche 1 bis 30 ausgebildeter optischer Körper sind.

## Claims

1. Inspection device for bottles with at least one light source (3) for illuminating the bottles, an image recording element (2) with an allocated image evaluating device and an optical body (4, 14) made of transparent material, **characterised in that** the optical body is made in one piece and its contour is so designed that a ray path (S) is produced which images an illuminated bottle (1) over its whole periphery at least in part, the light of which on passing through the optical body (4, 14) undergoes a plurality of deflections by total internal reflection.

2. Device according to Claim 1, **characterised in that** the entry and/or exit surface (A, E) of the optical body (4, 14) is arranged perpendicular to the axis of the section of the ray path (S) coming from the bottle region to be imaged or of the section of the ray path (S) leading to the image recording element (2).

3. Device according to Claim 1 or 2, **characterised in that** an optical body (4) usable in particular for a thread inspection and/or mouth side wall inspection has two external surface sections (B, C) and an internal surface section (D) which are directed inclined towards each other such that a total reflection of a ray path (S) occurs on each of these sections.

4. Device according to Claim 3, **characterised in that** the two external surface sections (B, C) are arranged tilted in opposing directions, mutually offset with respect to height.

5. Device according to Claim 3 and 4, **characterised in that** a ray path (S) coming from the illuminated bottle (1) whose axis runs inclined to the mouth plane or to the horizontal at an acute angle (α) in the region of between 15 and 30 degrees, in particular 27 degrees, first meets the first external surface section (B) lying below, is reflected there to the higher situated second external surface section (C) and from this to the internal surface section (D), which in turn brings about a total reflection directed to the image recording element (2).

6. Device according to Claim 5, **characterised in that** the inclination of the internal surface section (D) is chosen such that the ray path which images the bottle over its whole periphery at least in part converges towards the image recording element (2).

7. Device according to one of the claims 1 to 6, **characterised in that** the optical body (4, 14) has a light entry surface (A) directed towards the bottle (1) for the ray path (S) coming from the bottle to be imaged and, together with the first external surface section (B) causing the first total reflection, this forms a blade-shaped lower edge on the optical body (4, 14).

8. Device according to one of the claims 1 to 7, **characterised in that** the body (4, 14) has a lower edge arranged above the bottle mouth.

9. Device according to one of the claims 1 to 8, **characterised in that** the optical body (4, 14) is designed as a closed, substantially disk-shaped body with a hood-shaped vertical cross-section.

10. Device according to one of the previous claims 1 to 9, **characterised in that** the optical body (4, 14) has a hollow space narrowing from its underside in the direction of its upper side, the central region of said hollow space having a block (5) against axial passage of light from the bottle mouth to the image recording element (2) arranged coaxially above it, in particular if the bottle (1) is illuminated from its base.

11. Device according to one of the claims 1 to 10, **characterised in that** a light source (3a), in particular a stroboscope lamp, is positioned below the bottle (1) and illuminates the bottle base.

12. Device according to one of the claims 1 to 10, **characterised in that** a light source (3b) is arranged laterally below the bottle periphery section to be tested and illuminates it from outside obliquely upwards in the direction of the bottle mouth.

13. Device according to one of the claims 1 to 10, **characterised in that** a light source (3c) is arranged laterally adjacent to the bottle periphery section to be tested and illuminates it from outside.

14. Device according to one of the claims 1 to 10, **characterised in that** a light source (3d) is arranged above the bottle mouth and illuminates the bottle periphery section to be tested obliquely from above.

15. Device according to Claim 14, **characterised in that** the light source (3d) is arranged above the optical body (4) and illuminates the bottle periphery section to be tested through the optical body (4), whereby the light source (3d) is preferably designed ring-shaped.

16. Device according to Claim 15, **characterised in that** the entry (F) and exit surface section (G) for the light source (3d) on the optical body (4) are designed such that the light beams coming from the light source (3d) pass through the surface sections (F, G) perpendicular.

17. Device according to Claim 10, **characterised in that** a light source is arranged in the hollow space of the optical body (4).

18. Device according to one of the previous claims, **characterised in that** the optical body (4, 14) is oriented coaxially with the optical axis of the image recording element (2) and the image recording takes place when the bottle vertical axis is substantially aligned with the optical axis of the image recording element (2).

19. Device according to one of the previous claims, **characterised in that** the image recording element (2) is a CCD camera with a lens, in particular a telecentric lens.

20. Device according to one of the previous claims, **characterised in that** the contour of the optical body (4) is designed such that the mouth side wall region of a bottle (1) is recorded round the entire periphery, in particular also a screw thread present in this region.

21. Device according to one of the claims 1 to 19, **characterised in that** the contour of the optical body (14) is designed such that the bottle side wall is recorded round the entire periphery over its full height.

22. Device according to one of the previous claims, **characterised in that** the optical body (4, 14) has two plane-parallel surfaces (H, I) or an opening in the centre for inspecting the internal side wall and/or the base and/or the mouth sealing surface.

23. Device according to one of the previous claims, **characterised in that** the optical body (4, 14) is designed with rotational symmetry.

24. Device according to one of the previous claims 1 to 22, **characterised in that** the optical body has the contour of a truncated pyramid, in particular a hollow truncated pyramid.

25. Device according to one of the previous claims, **characterised in that** the surface sections (B, C, D) of the optical body (4, 14) causing a total reflection of a ray path (S) have straight generating lines.

26. Device according to one of the previous claims, **characterised in that** an optical body is designed such that at least two ray paths, differently inclined to the bottle vertical axis are produced.

27. Device according to Claim 26, **characterised in that** a first ray path is used for imaging and a second ray path for illuminating a bottle.

28. Device according to Claim 27, **characterised in that** the mouth of an open bottle is imaged by a ray path, whereby the bottle is illuminated on the base.

29. Device according to Claim 26, **characterised in that** a ray path images the end face and/or a neck collar of a bottle and one or more further ray paths image the jacket surface of the same bottle over its whole periphery in part or over the whole surface, preferably the region of the mouth side wall.

30. Device according to at least one of the previous claims 1 to 29, **characterised in that** for testing at least one quality feature in the region of the jacket surface of a bottle or similar by means of illuminating the jacket surface and an image recording device with an allocated image evaluating device, whereby the jacket surface is detected over its entire periphery, imaged by the image recording device and processed by the image evaluating device, at least in the height section having the quality feature, by means of optical means projecting at least one ray path coming from the jacket surface onto the image recording device.

31. Device according to Claim 30, **characterised in that** the jacket surface is detected and recorded by the optical means over its entire height and its entire periphery.

32. Device according to Claim 30 or 31, **characterised in that** the image evaluating device firstly determines the position of a quality feature at any peripheral or height position of the bottle jacket surface and compares this with a presettable target value or reference pattern and, in the event of an unacceptable deviation, issues a signal.

33. Device according to one of the claims 30 to 32, **characterised in that** the quality feature to be inspected is the sealing surface of an opened clip-lock bottle and/or a label on the jacket surface of a bottle or similar, in particular the shape and/or the position and/or the colour and/or the logo and/or a bar code and/or printed matter on the label.

34. Device according to one of the claims 30 to 33, **characterised in that** the quality feature to be inspected is the fill level of a bottle made of transparent material.

35. Device according to one of the claims 30 to 34, **characterised in that** the optical means is arranged stationary above the bottles or similar able to be continuously moved past by means of a transport device and is preferably designed as an optical body comprising transparent material, in particular according to one of the claims 1 to 30.

## Revendications

1. Dispositif d'inspection pour bouteilles comportant au moins une source de lumière (3) pour illuminer les bouteilles, un organe de prise de vues (2) auquel est adjoint un dispositif d'exploitation d'image et un corps optique (4, 14) en matériau transparent à la lumière,
**caractérisé en ce que**
le corps optique est monobloc et son contour est réalisé pour créer un faisceau lumineux (S) reproduisant sur la totalité du périmètre, au moins par zone, une bouteille illuminée (1), et dont la lumière, au passage par le corps optique (4, 14), est déviée plusieurs fois par une réflexion intérieure totale.

2. Dispositif selon la revendication 1,
**caractérisé en ce que**
la surface d'entrée et/ou de sortie (A, E) du corps optique (4, 14) est alignée perpendiculairement à l'axe du segment du faisceau lumineux (S) provenant de la zone de la bouteille à reproduire ou du segment du faisceau lumineux (S) conduisant à l'organe de prise de vues (2).

3. Dispositif selon la revendication 1 ou 2,
**caractérisé en ce qu'**
un corps optique (4), utilisable en particulier pour une inspection du filetage et/ou de la paroi latérale d'embouchure, présente deux segments de surface extérieure (B, C) et un segment de surface intérieure (D), alignés de façon inclinée l'un par rapport à l'autre pour qu'une réflexion totale d'un faisceau lumineux (S) se produise chaque fois sur ces segments.

4. Dispositif selon la revendication 3,
**caractérisé en ce que**
les deux segments de surface extérieure (B, C) sont décalés l'un au-dessus de l'autre dans le sens de la hauteur et inclinés en sens contraire.

5. Dispositif selon les revendications 3 et 4,
**caractérisé en ce qu'**
un faisceau lumineux (S) provenant de la bouteille illuminée (1) dont l'axe est incliné par rapport au plan de l'embouchure ou horizontal avec un angle aigu (α) dans la plage des 15 à 30 degrés, en particulier de 27 degrés, rencontre d'abord le premier segment de surface extérieure (B) figurant en bas, y est réfléchi vers le premier segment de surface extérieure (C) figurant plus haut et, de celle-ci, vers le segment de surface intérieure (D) qui, de nouveau, effectue une réflexion totale dirigée vers l'organe de prise de vues (2).

6. Dispositif selon la revendication 5,
**caractérisé en ce que**
l'inclinaison du segment de surface intérieure (D) est choisie de manière telle que le faisceau lumineux reproduisant la bouteille sur la totalité du périmètre, au moins par zone, converge vers l'organe de prise de vues (2).

7. Dispositif selon l'une quelconque des revendications 1 à 6,
**caractérisé en ce que**
le corps (4, 14) présente une surface d'entrée de lumière (A) dirigée vers la bouteille (1) pour le faisceau lumineux (S) provenant de la bouteille à reproduire et forme celle-ci sur le corps optique (4, 14) avec le premier segment de surface extérieure (B) effectuant la première réflexion totale d'un bord inférieur en forme de lame.

8. Dispositif selon l'une quelconque des revendications 1 à 7,
**caractérisé en ce que**
le corps optique (4, 14) présente un bord inférieur disposé au-dessus de l'embouchure de la bouteille.

9. Dispositif selon l'une quelconque des revendications 1 à 8,
**caractérisé en ce que**
le corps optique (4, 14) est un corps fermé, pour l'essentiel en forme de plaque avec une section transversale verticale en forme de calotte.

10. Dispositif selon l'une quelconque des revendications 1 à 9,
**caractérisé en ce que**
le corps optique (4, 14) présente un espace creux se rétrécissant de sa face inférieure en direction de la face supérieure, dont la zone centrale présente une barrière (5) contre la traversée axiale de la lumière de l'embouchure de la bouteille vers l'organe de prise de vues (2), disposée coaxialement par-dessus, en particulier lorsque la bouteille (1) est illuminée à partir du fond de la bouteille.

11. Dispositif selon l'une quelconque des revendications 1 à 10,
**caractérisé en ce qu'**
une source de lumière (3a), en particulier une lampe stroboscopique, est positionnée sous la bouteille (1) et illumine le fond de la bouteille.

12. Dispositif selon l'une quelconque des revendications 1 à 10,
**caractérisé en ce qu'**
une source de lumière (3b) est disposée latéralement en dessous de la zone périphérique de la bouteille à vérifier et illumine celle-ci de l'extérieur, en biais vers le haut, en direction de l'embouchure de la bouteille.

13. Dispositif selon l'une quelconque des revendications 1 à 10,
**caractérisé en ce qu'**
une source de lumière (3c) est disposée latéralement à côté de zone périphérique de la bouteille à vérifier et illumine celle-ci de l'extérieur.

14. Dispositif selon l'une quelconque des revendications 1 à 10,
**caractérisé en ce qu'**
une source de lumière (3d) est disposée au-dessus de l'embouchure de la bouteille et illumine en biais d'en haut la zone périphérique de la bouteille à vérifier.

15. Dispositif selon la revendication 14,
**caractérisé en ce que**
la source de lumière (3d) est disposée au-dessus du corps optique (4) et illumine la zone périphérique de la bouteille à vérifier en traversant le corps optique (4), la source de lumière (3d) étant, de préférence, mise en une forme annulaire.

16. Dispositif selon la revendication 15,
**caractérisé en ce que**
les segments de surface d'entrée (F) et de sortie (G) de la source de lumière (3d) sont constitués de manière telle sur le corps optique (4) que les rayons lumineux provenant de la source de lumière (3d) traversent perpendiculairement les segments de surface (F, G).

17. Dispositif selon la revendication 10,
**caractérisé en ce qu'**
une source de lumière est disposée dans l'espace creux du corps optique (4).

18. Dispositif selon l'une quelconque des revendications précédentes,
**caractérisé en ce que**
le corps optique (4, 14) est aligné coaxialement à l'axe optique de l'organe de prise de vues (2) et la prise de vue s'effectue lorsque l'axe vertical de la bouteille s'aligne, pour l'essentiel, avec l'axe optique de l'organe de prise de vues (2).

19. Dispositif selon l'une quelconque des revendications précédentes,
**caractérisé en ce que**
l'organe de prise de vues (2) est une caméra CCD avec un objectif, en particulier une optique télécentrique.

20. Dispositif selon l'une quelconque des revendications précédentes,
**caractérisé en ce que**
le contour du corps optique (4) est tel que l'on détecte sur la totalité du périmètre la zone de paroi latérale d'embouchure d'une bouteille (1), en particulier également un filetage à visser existant dans cette zone.

21. Dispositif selon l'une quelconque des revendications 1 à 19,
**caractérisé en ce que**
le contour du corps optique (14) est tel que la paroi latérale de la bouteille est détectée sur la totalité du périmètre dans sa hauteur totale.

22. Dispositif selon l'une quelconque des revendications précédentes,
**caractérisé en ce que**
le corps optique (4, 14), pour un contrôle de paroi latérale intérieure et/ou de fond et/ou de surface d'étanchéité d'embouchure, présente au centre deux surfaces parallèles dans le plan (H, I) ou une ouverture.

23. Dispositif selon l'une quelconque des revendications précédentes,
**caractérisé en ce que**
le corps optique (4, 14) est constitué en symétrie de révolution.

24. Dispositif selon l'une quelconque des revendications 1 à 22,
**caractérisé en ce que**
le corps optique présente le contour d'un tronc de pyramide, en particulier, d'un tronc de pyramide creuse.

25. Dispositif selon l'une quelconque des revendications précédentes,
**caractérisé en ce que**
les sections de surface (B, C, D) du corps optique (4, 14) réalisant une réflexion totale d'un faisceau lumineux (S) présentent des lignes d'enveloppe droites.

26. Dispositif selon l'une quelconque des revendications précédentes,
**caractérisé en ce qu'**
un corps optique est constitué de manière telle qu'au moins deux faisceaux lumineux différents, inclinés par rapport au fond de la bouteille, sont créés.

27. Dispositif selon la revendication 26,
**caractérisé en ce qu'**
un premier faisceau lumineux est utilisé pour la reproduction et un deuxième faisceau lumineux pour l'illumination d'une bouteille.

28. Dispositif selon la revendication 27,
**caractérisé en ce que**
l'embouchure d'une bouteille ouverte est reproduite par un faisceau lumineux, la bouteille étant alors illuminée par le fond.

29. Dispositif selon la revendication 26,
**caractérisé en ce qu'**
un faisceau lumineux reproduit la surface frontale et/ou un col de bouteille et un ou plusieurs autres faisceaux lumineux la surface d'enveloppe de la même bouteille sur la totalité du périmètre, par zone ou sur la totalité de la surface, de préférence la zone de paroi latérale d'embouchure.

30. Dispositif selon au moins l'une des revendications précédentes, 1 à 29
**caractérisé en ce que**
pour vérifier au moins une caractéristique de qualité dans la zone de la surface d'enveloppe d'une bouteille ou similaire par illumination de la surface d'enveloppe et un dispositif de prise de vues avec un dispositif adjoint d'exploitation d'image, la surface d'enveloppe, au moins dans la section de hauteur présentant la caractéristique de qualité, est détectée par les moyens optiques projetant sur le dispositif de prise de vues au moyen d'au moins un faisceau lumineux provenant de la surface d'enveloppe, reproduite par le dispositif de prise de vues et traitée par le dispositif d'exploitation d'image.

31. Dispositif selon la revendication 30,
**caractérisé en ce que**
la surface d'enveloppe est détectée sur la totalité de sa hauteur et sur la totalité du périmètre, et reproduite par les moyens optiques.

32. Dispositif selon la revendication 30 ou 31,
**caractérisé en ce que**
le dispositif d'acquisition d'image détermine dans un premier temps, à partir de la reproduction sur la totalité du périmètre, la position d'une caractéristique de qualité se trouvant en une position indifférente en elle-même sur le périmètre ou sur la hauteur de la surface d'enveloppe, et compare celle-ci avec une valeur de consigne pré-définissable ou un motif de référence et délivre un signal en cas d'écart inadmissible.

33. Dispositif selon l'une quelconque des revendications 30 à 32,
**caractérisé en ce que**
la caractéristique de qualité à vérifier est la surface d'étanchéité de fermeture d'une bouteille à étrier opercule ouvert et/ou une étiquette sur la surface d'enveloppe d'une bouteille ou similaire, en particulier la forme et/ou la position et/ou la couleur et/ou le logo et/ou un code barre et/ou une impression de l'étiquette.

34. Dispositif selon l'une quelconque des revendications 30 à 33,
**caractérisé en ce que**
la caractéristique de qualité à vérifier est le niveau de remplissage d'une bouteille constituée en un matériau transparent.

35. Dispositif selon l'une quelconque des revendications 30 à 34,
**caractérisé en ce que**
les moyens optiques sont disposés de façon stationnaire au-dessus des bouteilles ou d'autres articles similaires pouvant défiler en continu grâce à un dispositif de transport, et, de préférence, constitués d'un corps optique en un matériau transparent, en particulier configuré selon au moins l'une des revendications 1 à 30.
